# EUROPÄISCHE PATENTSCHRIFT

(11) **EP 2 499 391 B1**
(45) Veröffentlichungstag und Bekanntmachung des Hinweises auf die Patenterteilung: **09.04.2014**
(21) Anmeldenummer: 10778626.1
(22) Anmeldetag: 09.11.2010
(51) Int. Cl.: F16D 25/04

(54) **DRUCKMITTELGESTEUERTER KUPPLUNGSSTELLER FÜR EINE KOMPRESSORKUPPLUNG EINES NUTZFAHRZEUGS**
CLUTCH ACTUATOR CONTROLLED BY A PRESSURE MEDIUM FOR A COMPRESSOR CLUTCH OF A COMMERCIAL VEHICLE
ACTIONNEUR D'EMBRAYAGE COMMANDE PAR UN FLUIDE SOUS PRESSION POUR UN EMBRAYAGE DE COMPRESSEUR D'UN VEHICULE UTILITAIRE

(30) Priorität: 11.11.2009 DE 102009052789
(43) Veröffentlichungstag der Anmeldung: 19.09.2012
(73) Patentinhaber: KNORR-BREMSE Systeme für Nutzfahrzeuge GmbH, 80809 München (DE)
(72) Erfinder: HEBRARD, Gilles, F-14000 Caen (FR)
(74) Vertreter: Schönmann, Kurt
(86) Internationale Anmeldenummer: PCT/EP2010/067105
(87) Internationale Veröffentlichungsnummer: WO 2011/058005

(56) Entgegenhaltungen:
- EP-A1- 0 038 370
- DE-A1- 1 555 538
- DE-A1-102008 043 486
- DE-B- 1 224 573
- GB-A- 2 116 282
- US-A- 3 189 151

## Beschreibung

Die Erfindung betrifft einen druckmittelgesteuerten Kupplungssteller mit einem Stellkolben, der in einem Gehäuse in einer axialen Richtung beweglich angeordnet ist, wobei sich ein Ende des Stellkolbens in axialer Richtung auf einer elastischen Membran abstützt, die einen ersten Bereich des Gehäuses gegenüber einem zweiten Bereich des Gehäuses abdichtet.

Die Erfindung betrifft weiterhin eine Kompressorkupplung für ein Nutzfahrzeug mit einem erfindungsgemäßen Kupplungssteller.

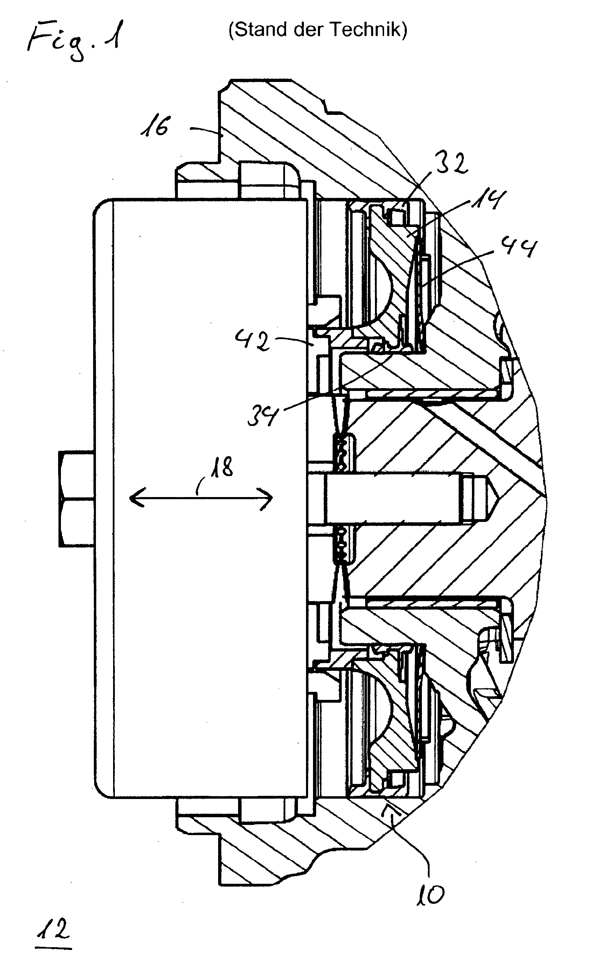

Fahrzeuge, insbesondere Nutzfahrzeuge, verfügen heutzutage neben einem zum Antrieb des Fahrzeugs verwendeten Antriebsaggregat über eine große Anzahl von dem Antriebsaggregat zugeordneten Nebenaggregaten, die ebenfalls von dem Antriebsaggregat angetrieben werden. Diese Nebenaggregate sind für den Betrieb des Fahrzeugs oftmals notwendig, wobei teilweise ein dauerhafter Betrieb und teilweise ein phasenweiser Betrieb der unterschiedlichen Nebenaggregate vorzusehen ist. So muss beispielsweise eine Einspritzpumpe, die dem Antriebsaggregat verdichteten Kraftstoff zuführt, während des Betriebs des Antriebsaggregates dauerhaft laufen. Ein Druckluftkompressor, wie er beispielsweise bei Nutzfahrzeugen zur Versorgung einer druckluftbetriebenen Betriebs- und Feststellbremse vorgesehen sein kann, kann jedoch zeitweise stillgelegt werden, solange innerhalb des Fahrzeugs ein ausreichender Druckluftvorrat zur Betätigung der Bremsanlage vorrätig ist. Das Stilllegen des Kompressors kann beispielsweise mit Hilfe einer Kupplung erfolgen, die zwischen dem Antriebsaggregat und dem Druckluftkompressor angeordnet isf. Eine dem Stand der Technik entnommene Kupplung ist beispielsweise in Figur 1 dargestellt.

Figur 1 zeigt eine Kupplung gemäß dem Stand der Technik. Eine dargestellte Kompressorkupplung 12, die in einer axialen Richtung 18 innerhalb eines Gehäuses 16 angeordnete, nicht sichtbare Reibscheiben miteinander koppelt, umfasst insbesondere einen Kupplungssteller 10, der für das Bewegen der Reibscheiben in axialer Richtung 18 während dem Betätigen der Kompressorkupplung 12 verantwortlich ist. Der Kupplungssteller 10 ist druckmittelbetätigt, wobei beispielsweise Druckluft als ein Druckmittel in eine Druckkammer mit einer Feder 44 eingeleitet wird. Ein Stellkolben 14 ist in der axialen Richtung 18 innerhalb des Gehäuses 16 beweglich, wobei Dichtrippen 32, 34 während der Bewegung des Stellkolbens 14 die Druckkammer abdichten. Der Stellkolben 14 wird in axialer Richtung 18 von einem Lager 42 geführt, das eine Rotation des Stellkolbens 14 während der Betätigung des Kupplungsstellers 10 verhindert. Weiterhin ist eine Feder 44 vorgesehen, die den Stellkolben 14 in der axialen Richtung 18 vorspannt, um das Lager 42 zu schonen. Die Feder 44 liegt in den bei der Betätigung des Kupplungsstellers 10 belüfteten Volumen. Die Dichtringe 32, 34 können beispielsweise an dem Stellkolben 14 montiert oder direkt an dem Stellkolben 14 gefertigt sein, wobei üblicherweise ein dünner Ölfilm zwischen den Dichtrippen 32, 34 und dem Gehäuse 16 für eine leichte Beweglichkeit des Stellkolbens 14 mit den Dichtrippen 32, 34 in der axialen Richtung 18 sorgt. Die Dichtheit des belüfteten Volumens wird daher letztlich durch den Ölfilm an der Gehäusewand gewährleistet, der auch kleinste Unebenheiten ausgleicht. Konstruktionsbedingt kann daher als Gleitmittel verwendetes Öl von den zum Betätigen des Kupplungsstellers 10 verwendeten Druckmittel aufgenommen werden und beim erneuten Betätigen des Kupplungsstellers 10, das heißt insbesondere bei dem Druckablassen aus der Druckkammer, in die Umwelt entweichen. Dies ist unter ökologischen Gesichtspunkten nachteilig und belastet in unnötiger Weise die Umwelt, da unkontrolliert ausgestoßenes Öl nur schwer abbaubar ist und auf viele Organismen eine toxische Wirkung ausübt.

Aus der DE 12 245 73 B ist ein Kupplungssteller gemäß dem Oberbegriff von Anspruch 1 bekannt.

Der vorliegenden Erfindung liegt daher die Aufgabe zugrunde, einen Kupplungssteller für eine Kompressorkupplung bereitzustellen, der verbesserte Schalteigenschaften und eine alternative axiale Vorspannung des Stellkolbens aufweist.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Der erfindungsgemäße Kupplungssteller baut auf dem gattungsgemäßen Stand der Technik dadurch auf, dass die elastische Membran auf der dem Stellkolben gegenüberliegenden Seite eine Erhebung aufweist. Eine Materialverstärkung der Membran auf der dem Stellkolben gegenüberliegenden Seite in Form einer Erhebung erlaubt im Zusammenspiel mit dem Gehäuse das Erzeugen einer den Stellkolben vorspannenden Kraft, so dass sich dieser immer in einer definierten axialen Position befindet. Weiterhin wird der zum Betätigen der Kupplung zurückzulegende Betätigungsweg in axialer Richtung reduziert und die Lebensdauer der axialen Lagerung des Stellkolbens erhöht. Da sich das Ende des Stellkolbens auf der Membran abstützen kann, kann ein Kontakt zwischen dem Druckmittel und einem als Gleitmittel verwendeten Öl verhindert werden. Ein unkontrollierter Ausstoß von Öl zusammen mit verwendetem Druckmittel wird daher zuverlässig verhindert.

Nützlicherweise kann dabei vorgesehen sein, dass die elastische Membran einen Balg formt, der zumindest teilweise innerhalb des Gehäuses angeordnet ist. Die Membran selbst kann auf diese Weise eine vollständige Druckkammer bereitstellen, zum Beispiel in Form eines Kissens beziehungsweise eines Torus, wobei eine Druckänderung innerhalb des Balgs den Stellkolben in der axialen Richtung durch das Ausdehnen beziehungsweise durch das Zusammenfallen des Balgs verschiebt.

Vorteilhafterweise kann vorgesehen sein, dass die elastische Membran zumindest einen Rand aufweist, der gegenüber dem Gehäuse festgelegt ist. Wahlweise kann dabei eine Membran innerhalb des Gehäuses fixiert werden, die bereits einen vollständigen Balg bildet oder die ein Volumen innerhalb des Gehäuses in zwei voneinander getrennte Bereiche unterteilt, um einen Balg zu bilden. Aufgrund der Elastizität der Membran ist im zweiten Fall die gebildete Trennwand deformierbar und kann bei einer Druckerhöhung den auf der Membran abgestützten Stellkolben in axialer Richtung bewegen. Im ersten Fall wird nur die Lage des Balgs durch die Fixierung des Randes in dem Gehäuse festgelegt.

Vorzugsweise kann dabei vorgesehen sein, dass der zumindest eine Rand der elastischen Membran durch eine Dichtrippe gebildet ist. Das Ausbilden des Randes der Membran als Dichtrippe erleichtert die Montage und erhöht die Stabilität des Kupplungsstellers.

Besonders bevorzugt kann sein, dass die elastische Membran gewebeverstärkt ist. Auf diese Weise kann die Haltbarkeit der Membran und damit des Kupplungsstellers insgesamt erhöht werden.

Weiterhin kann vorgesehen sein, dass das die elastische Membran im Abstützbereich des Stellkolbens eine Eindellung aufweist, in die das Ende des Stellkolbens hineinragt. Auf diese Weise kann der Stellkolben quasi auf der Oberfläche der Membran gelagert werden, so dass eine weitere Führung des Stellkolbens in axialer Richtung eventuell entfallen kann.

Nützlicherweise kann auch vorgesehen sein, dass die elastische Membran im Wesentlichen kreisförmig ist. Auf diese Weise ist insbesondere eine Kraftübertragung auf den Stellkolben ohne störende radiale Komponenten möglich. Nützlicherweise kann auch vorgesehen sein, dass der Stellkolben als Hohlkolben ausgeführt ist durch den eine Welle der Kompressorkupplung hindurchgeführt wird und dass die elastische Membran eine Öffnung zur Durchführung der Welle aufweist. Auf diese Weise ist eine besonders kompakte Bauform der Kompressorkupplung realisierbar.

Insbesondere kann dabei vorgesehen sein, dass die Öffnung zur Durchführung der Welle kreisförmig ist.

Die Erfindung wird nun mit Bezug auf die begleitenden Zeichnungen anhand einer besonders bevorzugten Ausführungsform beispielhaft erläutert.

Es zeigen:
- Figur 1: eine Kompressorkupplung gemäß dem Stand der Technik;
- Figur 2: eine erfindungsgemäße Kompressorkupplung;
- Figur 3: eine Detailansicht eines erfindungsgemäßen Kupplungsstellers;
- Figur 4: eine Draufsicht auf eine elastische Membran und
- Figur 5: eine geschnittene Seitenansicht einer elastischen Membran.

In den folgenden Zeichnungen bezeichnen gleiche Bezugszeichen gleiche oder gleichartige Teile.

Figur 1 zeigt eine Kompressorkupplung gemäß dem Stand der Technik und wurde bereits beschrieben.

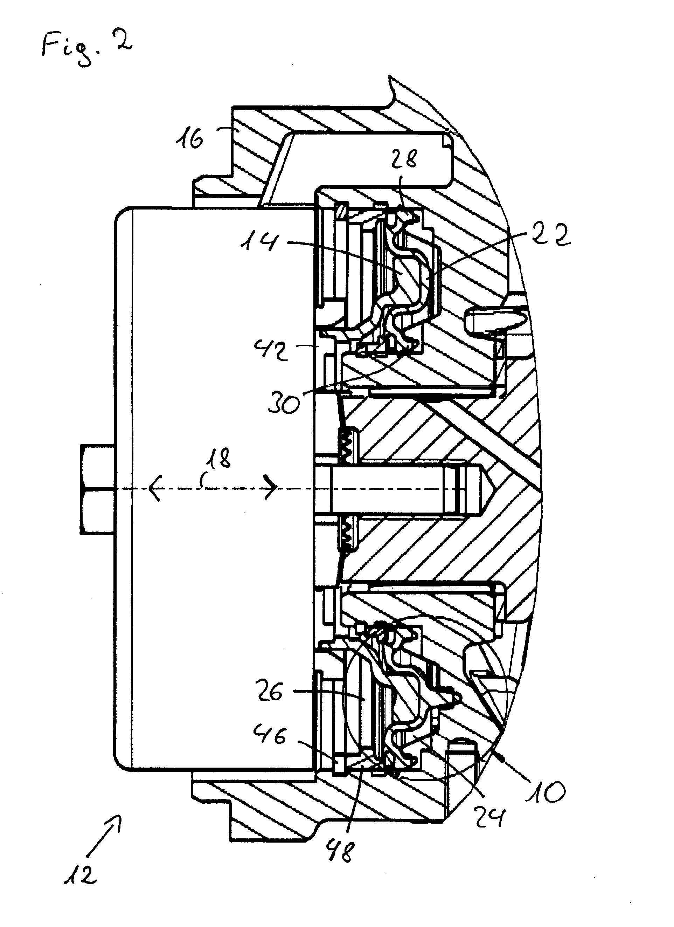

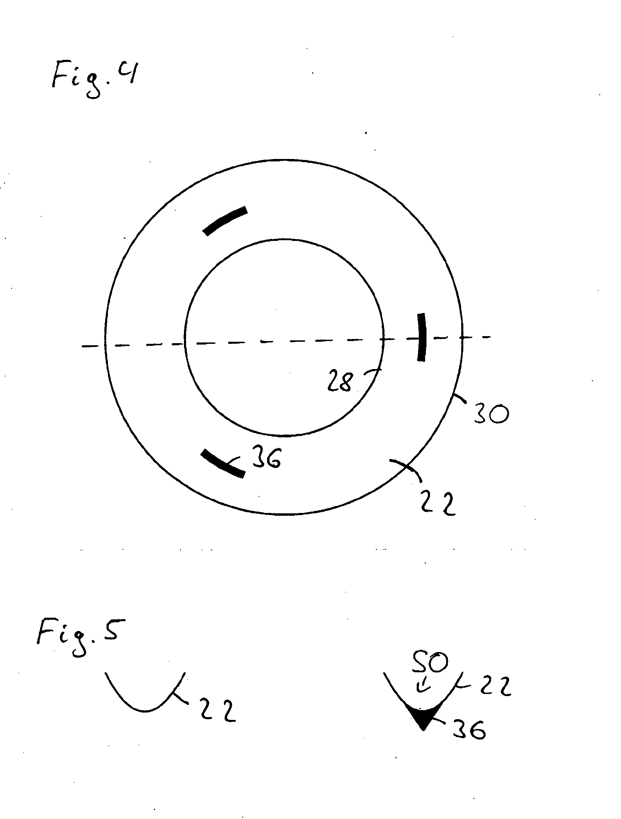

Figur 2 zeigt eine erfindungsgemäße Kompressorkupplung. Im Unterschied zu der aus Figur 1 bekannten Kompressorkupplung 12 weist die in Figur 2 dargestellte erfindungsgemäße Kompressorkupplung 12 eine-elastische Membran 22 auf, die gegenüber dem Gehäuse 16 über Ränder 28, 30 festgelegt ist und dabei ein Volumen innerhalb des Gehäuses 16, in dem sich der Stellkolben 14 in der axialen Richtung 18 bewegen kann, in einen ersten Bereich 24 und einen zweiten Bereich 26 untereilt, wobei der Stellkolben 14 durch die elastische Membran 22 von dem ersten Bereich 24 getrennt ist. Die Ränder 28, 30 der elastischen Membran 22 sind über einen Federring 46 und eine Unterlagscheibe 48 gegenüber dem Gehäuse 16 fixiert. Weiterhin ist ein Lager 42 vorgesehen, welches den Stellkolben 14 in der axialen Richtung 18 gegenüber dem Gehäuse 16 lagert. Zum Betätigen der dargestellten Kompressorkupplung 12 wird dem Kupplungssteller 10 Druckmittel in den ersten Bereich 24 zugeführt. Aufgrund des resultierenden Druckanstieges verformt sich die elastische Membran 22 derart, dass der Stellkolben 14 in der axialen Richtung 18 verschoben wird. Dabei wird die dargestellte Kompressorkupplung 12 betätigt, zum Beispiel geöffnet. Bei der Montage der dargestellten Kompressorkupplung 10 wird zunächst die elastische Membran 22 in dem Gehäuse 16 platziert. Anschließend wird die elastische Membran 22 unter Verwendung der Unterlagscheibe 48 mithilfe des Federringes 46, der als Sicherungsring wirkt, fixiert. Schließlich kann der Stellkolben 14 in das Gehäuse 14 eingeführt werden. Bei der Montage des Stellkolbens 14 wird eine in Zusammenhang mit Figur 4 beschriebene Erhebung gegen das Gehäuse 16 gepresst, die die Funktion der Feder 44 aus der Figur 1 übernimmt. Eine fehlerhafte Montage der Feder 44 ist daher sicher ausgeschlossen.

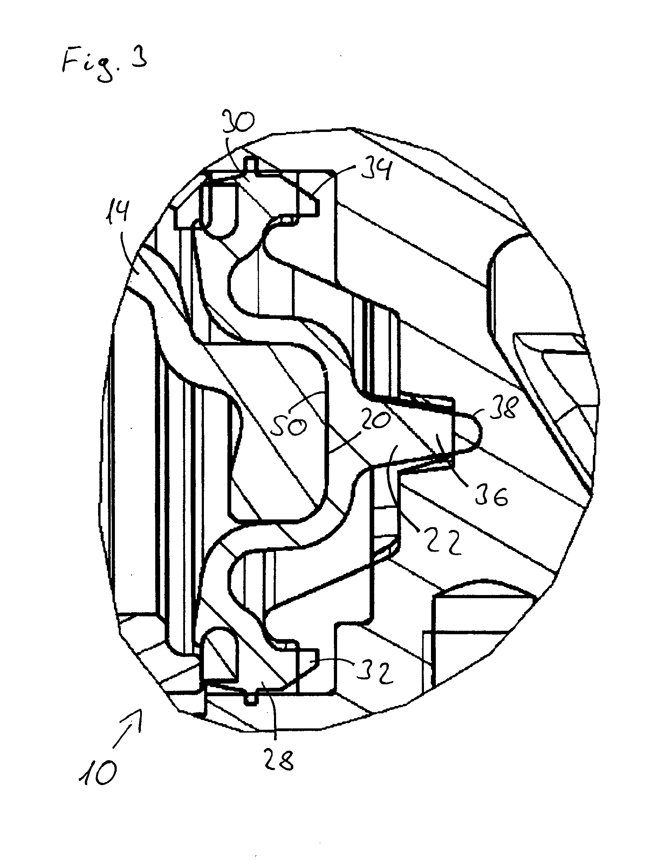

Figur 3 zeigt eine Detailansicht eines erfindungsgemäßen Kupplungsstellers. Deutlich erkennbar sind Dichtrippen 32, 34 an den Rändern 28 beziehungsweise 30 der elastischen Membran 22. Weiterhin ist eine Erhebung 36 auf einer von einem Ende 20 des Stellkolbens 14 abgewandten Seite der elastischen Membran 22 sichtbar, die in der dargestellten Schaltstellung des Kupplungsstellers 10 in einer zugeordneten Vertiefung 38 des Gehäuses 16 ruht. Die Erhebung 36 kann in der dargestellten Schaltposition der Kompressorkupplung 12 zusammen mit der Vertiefung 38 eine Vorspannung des Stellkolbens 14 realisieren, um die Lebensdauer des aus Figur 2 bekannten Lagers 42 positiv zu beeinflussen. Weiterhin weist die elastische Membran 22 eine Eindellung 50 auf, in der das Ende 20 des Stellkolbens 14 aufgenommen wird. Auf diese Weise kann eventuell die Lagerung 42 entlastet beziehungsweise eingespart werden.

Figur 4 zeigt eine Draufsicht auf eine elastische Membran. Die dargestellte elastische Membran 22 weist einen inneren Rand 28 und einen äußeren Rand 30 auf und ist kreisförmig ausgeführt. Weiterhin ist die Erhebung 36, die bereits aus Figur 3 bekannt ist, dargestellt. Die Erhebung 36 kann umlaufend oder wie in Figur 4 gezeigt aus mehreren separaten Erhebungen 36 aufgebaut sein. Die Anzahl der Erhebungen 36 kann dabei variiert werden. Der innere Rand 28 der elastischen Membran 22 begrenzt eine kreisförmige Öffnung, durch die beispielsweise eine Welle durchgeführt werden kann. Auf diese Weise kann die erfindungsgemäße Kompressorkupplung besonders kompakt gebaut werden. Die elastische Membran 22 kann insbesondere ein Gewebe umfassen, welches die Struktur der elastischen Membran 22 insbesondere mechanisch verstärkt und ihre Lebensdauer erhöht. Die elastische Membran 22 ist also als ein Kompositbauteil auffassbar, insbesondere falls an den Rändern 28, 30 zusätzliche Dichtrippen 32, 34 angebracht sind, die aus einem weiteren Material bestehen können.

Figur 5 zeigt eine geschnittene Seitenansicht einer elastischen Membran. Dargestellt ist die elastische Membran 22 entlang der aus Figur 4 ersichtlichen Schnittlinie. Deutlich sichtbar ist sowohl die Eindellung 50 zur Aufnahme des Endes 20 des Stellkolbens 14 sowie die Erhebung 36 auf der der Eindellung 50 abgewandten Seite der elastischen Membran 22, über die eine Vorspannung des Stellkolbens erzeugt werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Kupplungssteller
- 12: Kompressorkupplung
- 14: Stellkolben
- 16: Gehäuse
- 18: axiale Richtung
- 20: Ende
- 22: elastische Membran
- 24: erster Bereich
- 26: zweiter Bereich
- 28: Rand
- 30: Rand
- 32: Dichtrippe
- 34: Dichtrippe
- 36: Erhebung
- 38: Vertiefung
- 42: Lager
- 44: Feder
- 46: Federring
- 48: Unterlagsscheibe
- 50: Eindellung

## Patentansprüche

1. Druckmittelgesteuerter Kupplungssteller (10) mit einem Stellkolben (14), der in einem Gehäuse (16) in einer axialen Richtung (18) beweglich angeordnet ist, wobei sich ein Ende (20) des Stellkolbens (14) in axialer Richtung (18) auf einer elastischen Membran (22) abstützt, die einen ersten Bereich (24) des Gehäuses (16) gegenüber einem zweiten Bereich (26) des Gehäuses (16) abdichtet, wobei die elastische Membran (22) auf der dem Stellkolben (14) gegenüberliegenden Seite eine Erhebung (36) aufweist, und wobei die Erhebung (36) in einer Schaltstellung des Kupplungsstellers (10) in einer zugeordneten Vertiefung (38) des Gehäuses (16) ruht, **dadurch gekennzeichnet, dass** die Erhebung (36) und die zugeordnete Vertiefung (38) zusammen in dieser Schaltstellung einer Vorspannung des Stellkolbens (14) in der axialen Richtung (18) erzeugen.

2. Kupplungssteller (10) nach Anspruch 1, **dadurch gekennzeichnet, dass** die elastische Membran (22) einen Balg formt, der zumindest teilweise innerhalb des Gehäuses (16) angeordnet ist.

3. Kupplungssteller (10) nach Anspruch 1 oder 2, **dadurch gekennzeichnet, dass** die elastische Membran (22) zumindest einen Rand (28, 30) aufweist, der gegenüber dem Gehäuse (16) festgelegt ist.

4. Kupplungssteller (10) nach Anspruch 3, **dadurch gekennzeichnet, dass** der zumindest eine Rand (28, 30) der elastischen Membran (22) durch eine Dichtrippe (32, 34) gebildet ist.

5. Kupplungssteller (10) nach einem der vorhergehenden Ansprüche, **dadurch gekennzeichnet, dass** die elastische Membran (22) gewebeverstärkt ist.

6. Kupplungssteller (10) nach einem der vorhergehenden Ansprüche, **dadurch gekennzeichnet, dass** das die elastische Membran (22) im Abstützbereich des Stellkolbens (14) eine Eindellung (50) aufweist, in die das Ende (20) des Stellkolbens (14) hineinragt.

7. Kupplungssteller (10) nach einem der vorhergehenden Ansprüche, **dadurch gekennzeichnet, dass** die elastische Membran (22) im Wesentlichen kreisförmig ist.

8. Kupplungssteller (10) nach einem der vorhergehenden Ansprüche, **dadurch gekennzeichnet,**
- **dass** der Stellkolben (14) als Hohlkolben ausgeführt ist durch den eine Welle einer Kompressorkupplung (12) hindurchfürhrbar ist und
- **dass** die elastische Membran (22) eine Öffnung zur Durchführung der Welle aufweist.

9. Kupplungssteller (10) nach Anspruch 8, **dadurch gekennzeichnet, dass** die Öffnung zur Durchführung der Welle kreisförmig ist.

10. Kompressorkupplung (12) für ein Nutzfahrzeug mit einem Kupplüngssteller (10) nach einem der vorhergehenden Ansprüche.

## Claims

1. Pressure medium-controlled clutch actuator (10), comprising an actuating piston (14), which is arranged so that it can move in an axial direction (18) in a housing (16), wherein one end (20) of the actuating piston (14) is supported in an axial direction (18) on an elastic diaphragm (22), which seals off a first area (24) of the housing (16) from a second area (26) of the housing (16), wherein the elastic diaphragm (22) has a projection (36) on the side opposite the actuating piston (14), and wherein the projection (36) rests in an associated indentation (38) of the housing (16) in one switching position of the clutch actuator (10), **characterised in that** in this switching position the projection (36) and the associated indentation (38) together generate a preload of the actuating piston (14) in the axial direction.

2. Clutch actuator (10) according to claim 1, **characterised in that** the elastic diaphragm (22) forms a bellows, which is arranged at least partially inside the housing (16).

3. Clutch actuator (10) according claim 1 or 2, **characterised in that** the elastic diaphragm (22) has at least one edge (28, 30), which is fixed in relation to the housing (16).

4. Clutch actuator (10) according to claim 3, **characterised in that** the at least the one edge (28, 30) of the elastic diaphragm (22) is represented by a sealing web (32,34).

5. Clutch actuator (10) according to any of the preceding claims, **characterised in that** the elastic diaphragm (22) is fabric-reinforced.

6. Clutch actuator (10) according to any of the preceding claims, **characterised in that** the elastic diaphragm (22) comprises in the support area of the actuating piston (14) an indentation (50), into which the end (20) of the actuating piston (14) projects.

7. Clutch actuator (10) according to any of the preceding claims, **characterised in that** the elastic diaphragm (22) is substantially circular.

8. Clutch actuator (10) according to any of the preceding claims, **characterised in that**
- the actuating piston (14) is embodied as a hollow piston, through which a shaft of the compressor clutch (12) is passed, and
- **in that** the elastic diaphragm (22) has an opening for the passage of the shaft.

9. Clutch actuator (10) according to claim 8, **characterised in that** the opening for the passage of the shaft is circular.

10. Compressor clutch (12) for a commercial vehicle, comprising a clutch actuator (10) according to any of the preceding claims.

## Revendications

1. Actionneur (10) d'embrayage, commandé par du fluide sous pression comprenant un piston (14) d'actionnement, qui est monté mobile dans une direction (18) axiale dans une enveloppe (16), une extrémité (20) du piston (14) d'actionnement s'appuyant dans la direction (18) axiale sur une membrane (22) élastique qui rend étanche une première partie (24) de l'enveloppe (16) par rapport à une deuxième partie (26) de l'enveloppe (16), la membrane (22) élastique ayant une surélévation (36) du côté opposé au piston (14) d'actionnement et la surélévation (36) reposant, dans une position de commutation de l'actionneur (10) d'embrayage, dans une cavité (18) associée de l'enveloppe (16), **caractérisé en ce que** la surélévation (36) et la cavité (38) associée produisent ensemble dans cette position de commutation une précontrainte du piston (14) d'actionnement dans la direction (18) axiale.

2. Actionneur (10) d'embrayage suivant la revendication 1, **caractérisé en ce que** la membrane (22) élastique forme un soufflet qui est disposé au moins en partie à l'intérieur de l'enveloppe (16).

3. Actionneur (10) d'embrayage suivant la revendication 1 ou 2, **caractérisé en ce que** la membrane (22) élastique a au moins un bord (28, 30) qui est fixé par rapport à l'enveloppe (16).

4. Actionneur (10) d'embrayage suivant la revendication 3, **caractérisé en ce que** le au moins un bord (28, 30) de la membrane (22) élastique est formé par une lèvre (32, 34) d'étanchéité.

5. Actionneur (10) d'embrayage suivant l'une des revendications précédentes, **caractérisé en ce que** la membrane (22) élastique est renforcée par un tissu.

6. Actionneur (10) d'embrayage suivant l'une des revendications précédentes, **caractérisé en ce que** la membrane (22) élastique a, dans la partie d'appui du piston (14) d'actionnement, une déformation (50) dans laquelle pénètre l'extrémité (20) du piston (14) d'actionnement.

7. Actionneur (10) d'embrayage suivant l'une des revendications précédentes, **caractérisé en ce que** la membrane (22) élastique est sensiblement circulaire.

8. Actionneur (10) d'embrayage suivant l'une des revendications précédentes, **caractérisé**
- **en ce que** le piston (14) d'actionnement est réalisé sous la forme d'un piston creux dans lequel un arbre d'un embrayage (12) de compresseur peut passer et
- **en ce que** la membrane (22) élastique a une ouverture pour le passage de l'arbre.

9. Actionneur (10) d'embrayage suivant la revendication 8, **caractérisé en ce que** l'ouverture pour le passage de l'arbre est circulaire.

10. Embrayage (12) de compresseur pour un véhicule utilitaire ayant un actionneur (10) d'embrayage suivant l'une des revendications précédentes.
